Europäisches Patentamt

European Patent Office

Office européen des brevets

(11) Publication number: **0 684 742 A2**

## EUROPEAN PATENT APPLICATION

(21) Application number: 95107700.7

(51) Int. Cl.6: **H04Q 7/14**

(22) Date of filing: **19.05.95**

(30) Priority: **24.05.94 JP 109424/94**

(43) Date of publication of application:
**29.11.95 Bulletin 95/48**

(84) Designated Contracting States:
**DE FR GB NL**

(71) Applicant: **NEC CORPORATION**
**7-1, Shiba 5-chome**
**Minato-ku**
**Tokyo (JP)**

(72) Inventor: **Muramatsu, Toshihiko, c/o NEC**
**Corp.**
**7-1, Shiba 5-chome, Minato-ku**
**Tokyo (JP)**

(74) Representative: **VOSSIUS & PARTNER**
**Siebertstrasse 4**
**D-81675 München (DE)**

(54) **Selective calling receiver.**

(57) A selective calling receiver is provided, which can perform remote control of an information device via a telephone line, i.e., can cause the information device, from the transmission side, to perform transparent processing, e.g., image processing and the like in the information device. Information indicating that a selective call number in a selective call signal received by the selective calling receiver (100) is a specific one of a plurality of call numbers of the receiver, which are stored in an EEPROM (108), and message information in the selective call signal are transferred to the information device via an interface processing section (110) and a connector (111).

FIG. 1

The present invention relates to a selective calling receiver and, more particularly, to a selective calling receiver having a card interface.

With the recent growing trend toward personal computer networks and multimedia personal computers, they have a variety of applications. For example, personal computer LANs are popular in many offices, and the personal use of electric mail and host databases is also popular. With this trend, attempts have been made to achieve an improvement in communication and efficient operations.

Attempts have also been made to allow acquisition and edition of data outside offices, leading to a reduction in size of a personal computer (development of portable personal computers with improved portability, e.g., sub-note, palm-top, and note pad computers) and the spread of electronic notebooks.

With demands for the use of the above-mentioned environments, constructed in offices, from the outside of the offices, mobile computing has recently been proposed, which allows the use of environments such as personal computer LANs, constructed in offices, from the outside of the offices by radio communication using portable personal computers and the like.

Portable personal computers having card slots for connection to external devices increase in number of types. Standardization of these card slots has been promoted by the PCMCIA (Personal Computer Memory Card International Association) and the JEIDA (Japan Electronic Industry Development Association). A modem corresponding to such a card slot has been proposed as a radio modem for radio communication using portable personal computers.

For example, an information management apparatus is disclosed in Japanese Unexamined Patent Publication No. 5153029, in which a pager (selective calling receiver) is inserted into the card slot of an electronic notebook so as to be used as a radio modem, and information received by the selective calling receiver is loaded into the electronic notebook.

In the information management apparatus disclosed in the above official gazette, information received by the selective calling receiver is only transferred to the electronic notebook. According to this technique, however, transparent processing of executing a program in an information device such as an electronic notebook or personal computer (simply referred to as an information device hereinafter), e.g., image processing or the like in the device information, cannot be performed from the transmission side.

The present invention has been made in consideration of the above point, and has as its object to provide a selective calling receiver which allows a user to perform remote control of an information device via a telephone line, i.e., can directly cause the information device, from the transmission side, to perform transparent processing, e.g., image processing in the information device.

In order to achieve the above object, according to the present invention, there is provided a selective calling receiver having a card interface for connection to an information device, comprising memory means for storing at least two call numbers of a home receiver, and transfer control means for, when a selective call number in a received selective call signal coincides with one of the call numbers stored in the memory means, performing control to transfer information indicating a specific call number by which the home receiver is called and message information in the selective call signal to the information device via the card interface.

In addition, according to the present invention, there is provided an information device having a card slot for allowing a selective calling receiver to be inserted therein to be connected, and capable of performing a plurality of types of processing including call processing, comprising: an interface section for receiving, from a selective calling receiver connected to the card slot, information indicating a specific call number by which the selective calling receiver is called and message information in a received selective call signal, and message control means for performing control in accordance with the specific call number, by which the selective calling receiver is called, such that processing performed by the information device becomes processing corresponding to the message information.

With the above arrangement, according to the present invention, information indicating that a selective call number in a selective call signal received by the selective calling receiver is specific one of the plurality of call numbers of the selective calling receiver, and message information in the selective call signal are transferred to the information device via the card interface.

In the information device, information indicating a specific call number by which the selective calling receiver is called and message information in a received selective call signal is received, and control is performed in accordance with the call number, by which the selective calling receiver is called, such that processing performed by the information device becomes processing corresponding to the message information.

The present invention will be described with reference to accompanying drawings.

Fig. 1 is a block diagram showing a selective calling receiver according to an embodiment of the present invention;

Fig. 2 is a block diagram showing an information device according to an embodiment of the present invention;

Fig. 3A illustrates the format of a selective call signal received by the selective calling receiver shown in Fig. 1;

Fig. 3B illustrates the format of each word code in the selective call signal;

Fig. 4A illustrates the format of a selective call signal to explain an intermittent receiving operation performed by the selective calling receiver in Fig. 1 in a non-reception period during which no selective call signal for calling the home receiver is received;

Fig. 4B illustrates the format of a selective call signal to explain an intermittent receiving operation performed by the selective calling receiver in Fig. 1 in a reception period during which a selective call signal for calling the home receiver is received;

Fig. 5 is a flow chart showing processing performed by the selective calling receiver in Fig. 1; and

Fig. 6 is a flow chart showing processing performed by the information device in Fig. 2.

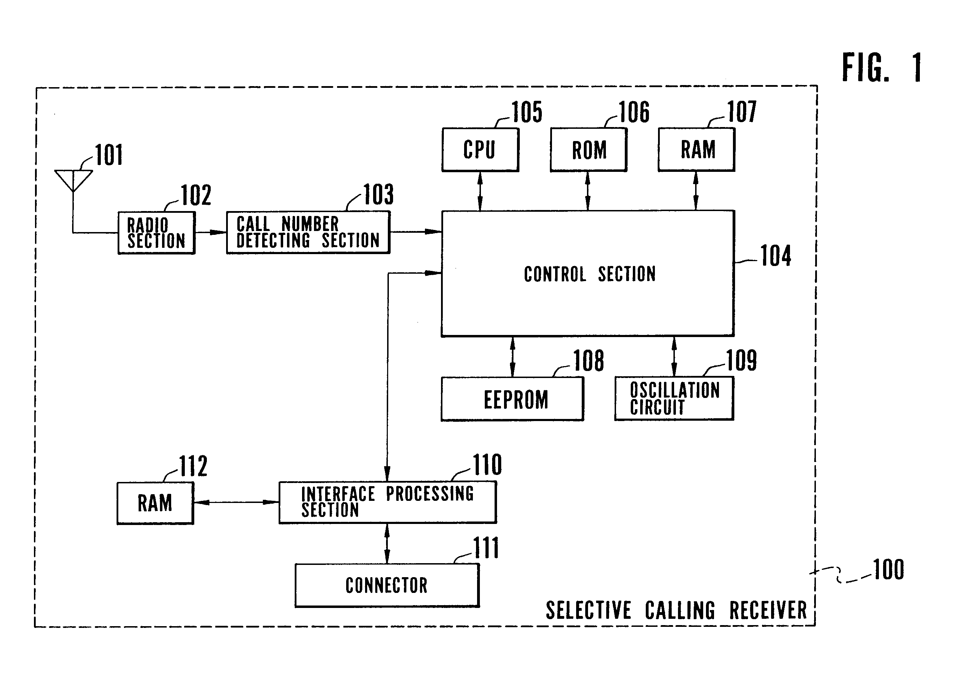

Fig. 1 is a block diagram showing a selective calling receiver according to an embodiment of the present invention.

A radio carrier wave modulated by a selective call number and a subsequent message signal on the transmission side is received, as a selective call signal, by an antenna 101. The received signal is then amplified and demodulated into a baseband signal by a radio section 102.

A call number detecting section 103 performs error correction and word extraction according to a predetermined signal form (e.g., the POCSAG scheme) so as to extract the selective call number from the selective call signal. The call number detecting section 103 then collates the extracted selective call number with the call number of a home receiver, which is stored in an EEPROM 108 in advance. If it is determined upon collation that the two numbers coincide with each other, the call number detecting section 103 extracts a message signal following the selective call number from the selective call signal and performs error correction. The section 103 then stores the message signal in RAMs 107 and 112 via a control section 104.

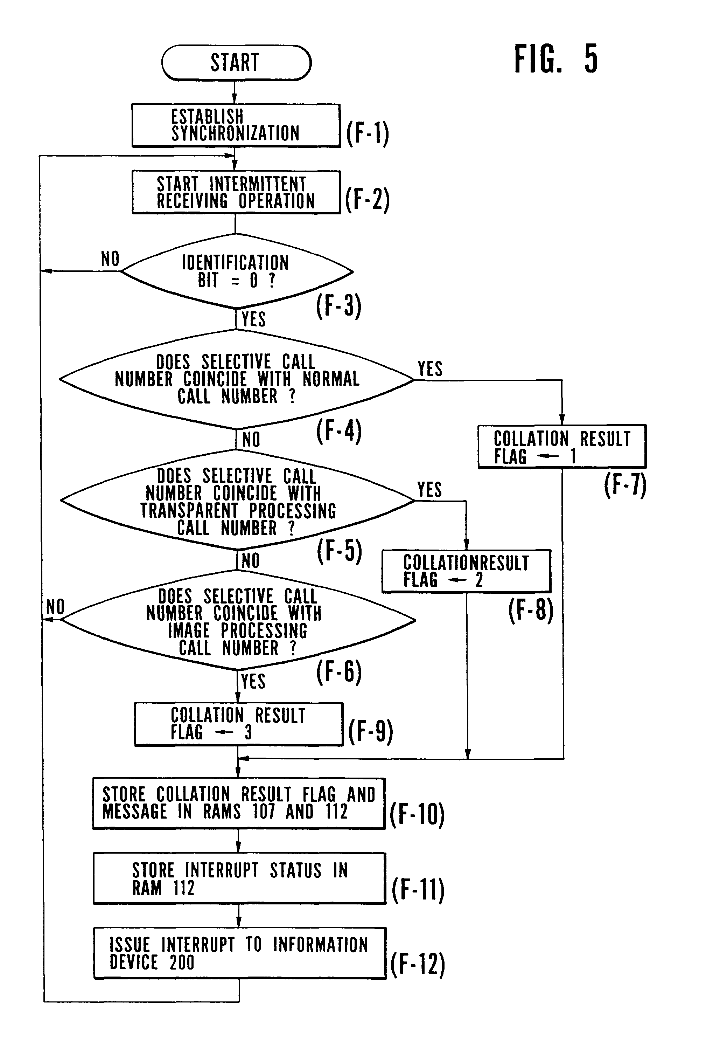

A CPU 105 performs message processing in accordance with a program (corresponding to the flow chart shown in Fig. 5) stored in a ROM 106. An oscillation circuit 109 supplies clocks required for processing performed by a selective calling receiver 100. An interface processing section 110 has a function of interfacing with an information device. The RAM 12 is used to store interface information required for the interface processing section 110, information from the information device, and the like.

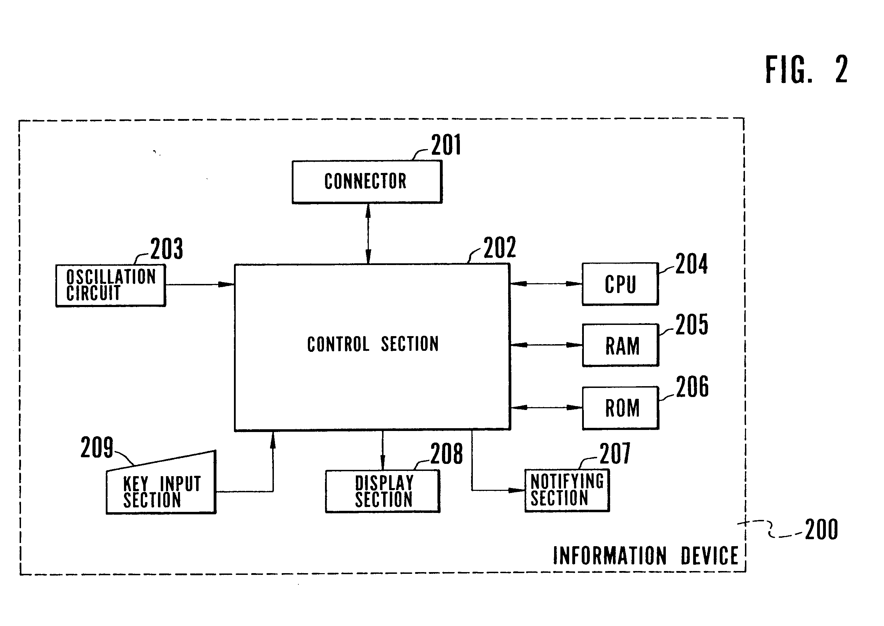

Fig. 2 is a block diagram showing an information device according to an embodiment of the present invention.

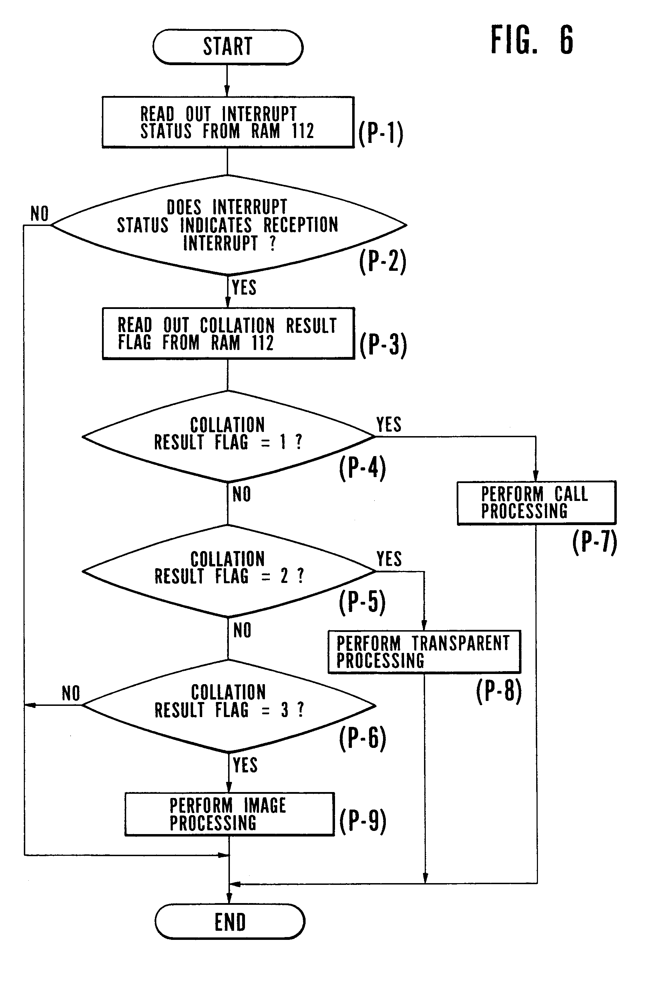

An information device 200 comprises a key input section 209 used by a user to perform a key input operation, a display section 208 for performing a display operation for the user, a ROM 206 for storing a program corresponding to the flow chart shown in Fig. 6, character fonts for displaying characters on the display section 208, and the like, a CPU 204 for executing the program stored in the ROM 206, a control section 202 for controlling the above components, an oscillation circuit 203 for supplying clocks required for processing performed by the information device 200, and an notifying section 207 for generating a buzzing sound. As will be described later, the information device 200 of this embodiment can selectively perform, for example, call processing, transparent processing, and image processing in accordance with message information.

A selective call signal received by the selective calling receiver 100 shown in Fig. 1 will be described next.

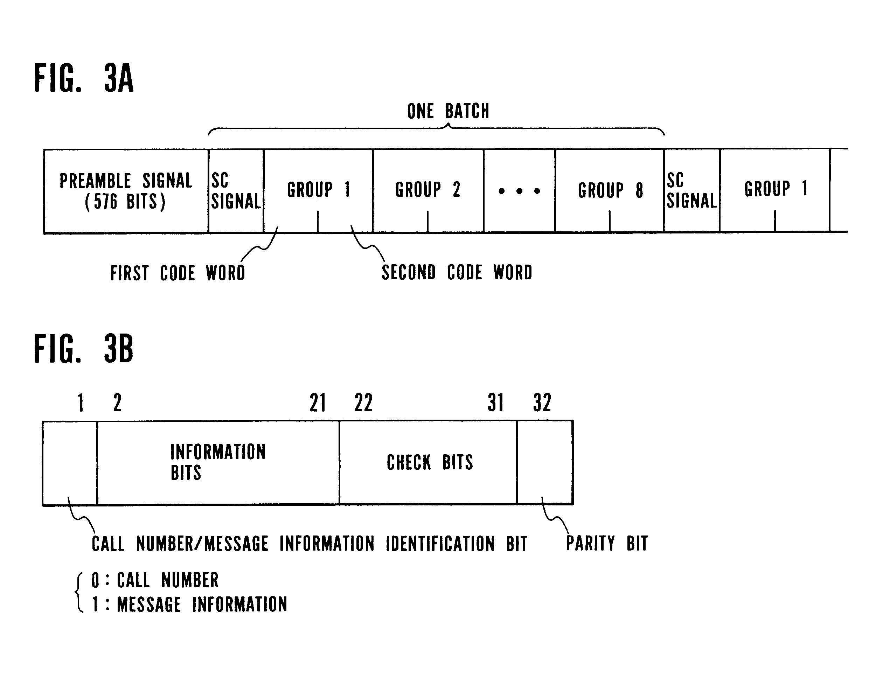

Fig. 3A shows the format of a selective call signal received by the selective calling receiver 100 shown in Fig. 1. Fig. 3B shows the format of each code word in the selective call signal.

As shown in Fig. 3A, a signal transmitted from the transmission side includes a 32-bit SC signal following a 576-bit preamble signal. The preamble and SC signals are used on the reception side to establish synchronization with the transmission side.

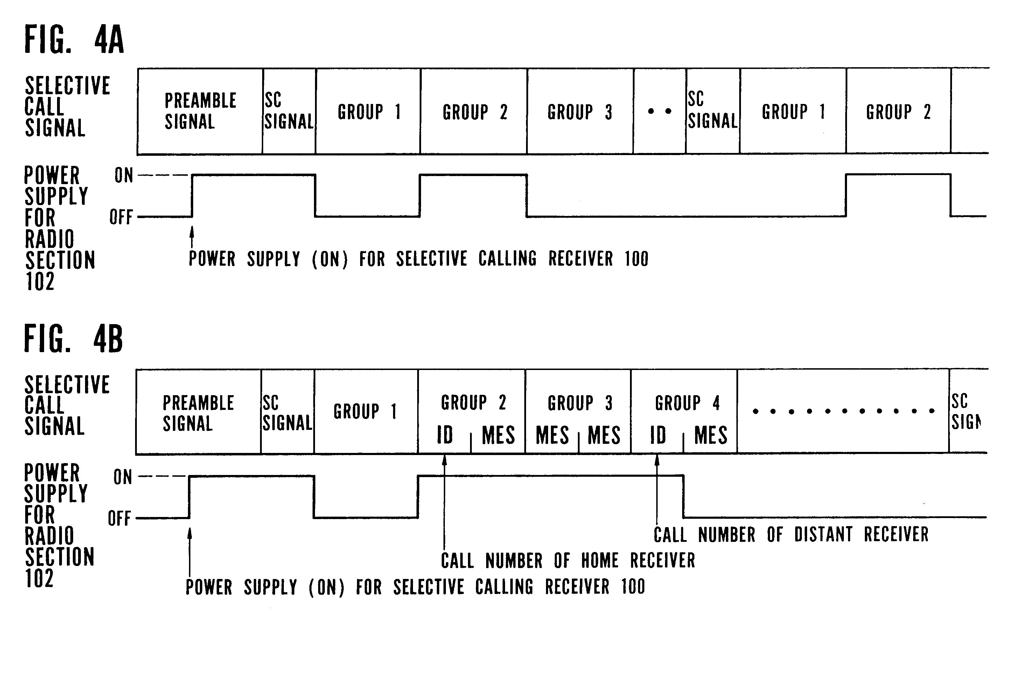

A given selective calling receiver belongs to one of groups. A selective call signal is transmitted to the receiver only at a time assigned to the group to which the receiver belongs. Therefore, after the power supply is turned on, and preamble and SC signals are received to establish synchronization, the selective calling receiver may perform a receiving operation only at a time assigned to the group to which the receiver belongs. A receiving operation performed only at a time assigned to the group to which the selective calling receiver belongs, i.e., an intermittent receiving operation, will be described later with reference to Figs. 4A and 4B.

As shown in Fig. 3A, a selective call signal for each selective calling receiver of each group is transmitted after an SC signal. When transmission of selective call signals to all the groups (eight groups in Fig. 3A) is completed, a selective call signal for each selective calling receiver of each group is transmitted again after the SC signal.

A selective call signal corresponding to each selective calling receiver of each group is constituted by first and second code words. A set of an SC signal and subsequent selective call signals for the selective calling receivers of all the groups is called one batch.

Fig. 3B shows the format of each code word of a selective call signal. Each code word consists of 32 bits, i.e., an call number/message information identification bit (simply referred to as an identification bit hereinafter), information bits, check bits, and a parity bit, which are arranged in the order named from the beginning of the code word.

An identification bit is one bit, which identifies the word code either as a code word indicating the selective call number of a selective calling receiver to be called or as a code word indicating message information. When this bit is "0", the code word is a selective call number. When the bit is "1", the code word is message information.

Information bits are 20 bits, at which the call number of a selective calling receiver to be called is set when the identification bit is "0", and message information is set when the identification bit is "1".

Check bits are 10 bits. A parity bit is one bit. That is, a transmission error is corrected by using a (31, 21) + 1 BCH code.

Figs. 4A and 4B are views for explaining an intermittent receiving operation performed by the selective calling receiver 100 shown in Fig. 1. Fig. 4A shows a non-reception period during which no selective call signal for calling the home receiver is received. Fig. 4B shows a reception period during which a selective call signal for calling the home receiver is received.

When the power supply for the selective calling receiver 100 is turned on, the power supply for the radio section 102 is also turned on to start receiving a selective call signal from the transmission side.

First of all, the selective calling receiver 100 keeps performing a receiving operation until a preamble signal is received. The selective calling receiver 100 then receives a preamble signal and a subsequent SC signal to establish synchronization with the transmission side.

As described above, the call number of the home receiver is stored in the EEPROM 108 of the selective calling receiver 100. Information on the group to which the home receiver belongs is also stored in the EEPROM 108. Figs. 4A and 4B illustrate a case wherein the selective calling receiver 100 belongs to group 2. After preamble and SC signals are received and synchronization with the transmission side is established, the power supply for the radio section 102 is kept off all the time except for a time during which a selective call signal for a selective calling receiver belonging to group 2 is transmitted, thus performing an intermittent receiving operation. With this operation, a reduction in power consumed by the selective calling receiver 100 is achieved.

In a non-reception period during which no selective call signal for calling the home receiver is received, the power supply for the radio section 102 is kept on only for a time during which a selective call signal for the selective calling receiver belonging to group 2 is transmitted.

Fig. 4B shows a reception period during which a selective call signal for calling the home receiver is received. When the identification bit of a selective call signal for the selective calling receiver belonging to group 2 is "0", and the call number of the home receiver is set at the information bits, it is possible that a message be transmitted to the home receiver even in a time during which selective call signals for selective calling receivers of the remaining groups are transmitted following the selective call signal for the home receiver. For this reason, the receiving operation is continued until a code word whose identification bit is "0" is transmitted.

Referring to Fig. 4B, reference symbol ID denotes a code word whose identification bit is "0", i.e., a selective call number; and MES, a code word whose identification bit is "1", i.e., message information. In the case shown in Fig. 4B, the call number of the home receiver is set in the first code word of a selective call signal for a selective calling receiver of group 2, and the identification bit is set to "0" for the first time in the first code word of a selective call signal for a selective calling receiver of group 4. That is, a receiving operation is continued from the first code word of the selective call signal for the selective calling receiver of group 2 to the first code word of the selective call signal for the selective calling receiver of group 4.

Pieces of message information for the home receiver are respectively set in the second code word of the selective call signal for the selective calling receiver of group 2 and the first and second code words of a selective call signal for a selective calling receiver of group 3. The selective calling receiver 100 stores these pieces of message information in the RAM 107 and the RAM 112.

Fig. 5 is a flow chart showing processing performed by the selective calling receiver 100 shown in Fig. 1.

The selective calling receiver 100 has a plurality of call numbers of its own, e.g., a call number for a normal calling operation (referred to as a normal call number hereinafter), a call number for transparent processing in the information device 200 (referred to as a transparent processing call number hereinafter), and a call number for image processing in the information device 200 (referred to as an image processing call number hereinafter). These call numbers are stored in the EEPROM 108 in advance.

The selective calling receiver 100 has a card interface. When the selective calling receiver 100 is inserted into the card slot of the information device 200, a connector 111 and a connector 201 are connected to each other.

The processing will be described below with reference to Fig. 5.

When the power supply for the selective calling receiver 100 is turned on, the receiver receives a preamble signal and an SC signal to establish synchronization with the transmission side (step F-1). The intermittent receiving operation shown in Fig. 4A is then started (step F-2).

Subsequently, it is checked whether the identification bit of a code word of the selective call signal is "0" (step F-3). If the identification bit is not "0", the flow returns to step F-2 to continue the intermittent receiving operation. If the identification bit is "0", a selective call number is extracted from the information bits of the code word and collated with a plurality of call numbers of the home receiver, which are stored in the EEPROM 108.

First of all, it is checked whether the selective call number coincides with the normal call number of the home receiver (step F-4). If they do not coincide with each other, it is checked whether the selective call number coincides with the transparent processing call number of the home receiver (step F-5). If they do not coincide with each other, it is further checked whether the selective call number coincides with the image processing call number of the home receiver (step F-6). If they do not coincide with each other, it is determined that the current selective call number is not a signal for the home receiver. The flow then returns to step F-2 to continue the intermittent receiving operation.

If it is determined in step F-4 that the selective call number coincides with the normal call number of the home receiver, "1" is set in a collation result flag (step F-7). If it is determined in step F-5 that the selective call number coincides with the transparent processing call number, "2" is set in the collation result flag (step F-8). If it is determined in step F-6 that the selective call number coincides with the image processing call number, "3" is set in the collation result flag (step F-9).

After the collation result flag is set in accordance with the selective call number, the collation result flag and a message set in the information bits of a subsequently received code word as message information (i.e., a code word whose identification bit is 1) are stored in the RAM 107 and the RAM 112 (step F-10).

Subsequently, an interrupt is generated to the information device 200 via the interface processing section 110 and the connector 111. Since a plurality of types of interrupts can be set, in addition to a reception interrupt generated in response to reception of a selective call signal as in this case, information indicating that the current interrupt is a reception interrupt must be transferred, as an interrupt status, to the information device 200. After this interrupt status is stored in the RAM 112 (step F-11), an interrupt is generated to the information device 200 (step F-12), and the flow returns to step F-2 to continue the intermittent receiving operation.

Fig. 6 is a flow chart showing processing performed by the information device 200 shown in Fig. 2. This processing is performed after an interrupt from the selective calling receiver 100 is accepted.

The selective calling receiver 100 is inserted into the card slot of the information device 200, so that the connector 201 is connected to the connector 111.

Upon receiving the interrupt from the selective calling receiver 100, the information device 200 reads out an interrupt status, stored in the RAM 112, via the connector 201, the connector 111, and the interface processing section 110 (step P-1). An interface section in the information device 200 serves to read out data from the RAM 112. If the interrupt status does not indicate a reception interrupt (step P-2), the corresponding interrupt processing is performed. In this case, however, only a reception interrupt will be described, and the processing is terminated if the interrupt status does not indicate a reception interrupt.

If it is determined in step P-2 that the interrupt status indicates a reception interrupt, the collation result flag stored in the RAM 112 is read out (step P-3). It is checked first whether the collation result flat is "1" (step P-4). If the collation result flag is not "1", it is then checked whether the flag is "2" (step P-5). If the flag is not "2", it is checked whether the flag is "3" (step P-6). If the flag is not "3", it is determined that the collation result flag is set mistakenly. As a result, the processing is terminated.

If it is determined in step P-4 that the collation result flag is "1", call processing is performed (step P-7). That is, a message is read out from the RAM 112, and this message is converted into a code to be displayed on the display section 208. At the same time, the notifying section 207 is caused to generate a sound so as to perform a notifying operation. Thereafter, the processing is terminated.

5

If it is determined in step P-5 that the collation result flag is "2", transparent processing is performed (step P-8). That is, a message is read out from the RAM 112. This message is regarded as commands for the information device 200 and executed. Thereafter, the processing is terminated.

A case wherein commands for the information device 200 are set as indicated by Table 1 will be described below.

Table 1

| Command | Operation |
|---------|-----------|
| 00H | power supply ON |
| 01H | power supply OFF |
| 02H | calling of system menu |
| 03H | calling of memo pad function |
| 04H | calling of telephone directory function |
| 05H | character display mode IN |
| 06H | character display mode OUT |
| 07H | character storage mode IN |
| 08H | character storage mode OUT |

Assume that the information device 200 has a telephone directory function as a database in which names and telephone numbers of individuals are stored in correspondence with transparent processing, and a memo pad function for recording simple memo information. The telephone directory and memo pad functions are included in a system menu. When, for example, the telephone directory function is to be used, the system menu is called first, and the telephone directory function is then called to be used.

Assume that the message read out from the RAM 112 is "00020305414243060744454608" in hexadecimal notation. In this case, as is apparent from Table 1, with command 00H, the power supply for the information device 200 is turned on. With command 02H, the system menu is called. With command 03H, the memo pad function is called. Next command 05H indicates that the subsequent message is a character code, and serves to display the characters on the display section 208. That is, "414243" in hexadecimal notation is processed as a character string "ABC" and displayed on the display section 208. As is apparent from Table 1, next message 06H is registered as a command and hence is processed as a command instead of characters. With command 06H, therefore, the corresponding operation "character display mode OUT", i.e., canceling of the character display mode, is performed. Next command 07H indicates that the subsequent message is a character code, and serves to store the characters in the RAM 205. That is, "444546" in hexadecimal notation is processed as a character string "DEF" and stored in the RAM 205. As is apparent from Table 1, next message 08H is registered as a command and hence is processed as a command instead of characters. With command 08H, the corresponding operation "character storage mode OUT", i.e., canceling of the character storage mode, is performed.

In performing "power supply OFF" corresponding to command 01H, the power supply for the respective components of the information device 200 except for the components required for communication with the selective calling receiver 100 is turned off. Similarly, in performing "power supply ON" corresponding to command 00H, the power supply for the components except for the components required for communication with the selective calling receiver 100 is turned on.

Table 1 shows the nine types of commands. However, the number of types of commands may be increased, or the commands may designate other operations. In this embodiment, each command consists of one byte. However, the present invention is not limited to this.

Referring back to Fig. 6, if it is determined in step P-6 that the collation result flag is "3", image processing is performed (step P-9). That is, a message is read out from the RAM 112, and the message is processed as data for image processing. Assume that the display section 208 of the information device 200 is an LCD. In this case, each dot corresponding to bit "0" of the message is displayed in white, and each dot corresponding to bit "1" of the message is displayed in black. In this manner, an image is displayed in accordance with the message. When this image processing (step P-9) is completed, the processing shown in Fig. 6 is terminated.

In the above embodiment, only the information device 200 has the notifying section for notifying a call from the transmission side. However, the present invention is not limited to this. Both the selective calling receiver 100 and the information device 200 shown in Fig. 1 may have notifying sections, or only the selective calling receiver 100 may have a notifying section.

In addition, in the above embodiment, the information device 200 and the selective calling receiver 100 communicate with each other according to the PCMCIA communication protocol. However, the present invention is not limited to this. For example, other communication protocols such as the XMODEM protocol may be used. Different information devices may support different communication protocols. For this reason, a plurality of types of communication protocols may be prepared in the ROM 106 or the EEPROM 108 so that the selective calling receiver can change the type of communication protocol depending on the type of information device to be connected thereto.

Furthermore, in the above embodiment, the selective calling receiver 100 is inserted into the card slot of the information device 200 to realize transparent processing and the like in the information device 200 from the transmission side. However, the present invention is not limited to this. For example, a radio unit or apparatus capable of receiving electric waves from the transmission side may be used in place of the selective calling receiver. In this case, the format or the like of information in electric waves from the transmission side is not limited to the POCSAG scheme but may be set in accordance with the radio unit or apparatus to be used.

As has been described above, according to the present invention, when the user calls the selective calling receiver via a telephone line, remote control of an information device into which the selective calling receiver is inserted can be realized.

More specifically, each function of the information device can be performed, as transparent processing, from the transmission side. For example, the telephone directory or memo pad function can be directly used, and the information device can be caused, from the transmission side, to perform image processing and the like.

## Claims

1. A selective calling receiver having a card interface for connection to an information device, comprising:
   memory means for storing at least two call numbers of a home receiver; and
   transfer control means for, when a selective call number in a received selective call signal coincides with one of the call numbers stored in said memory means, performing control to transfer information indicating a specific call number by which the home receiver is called and message information in the selective call signal to said information device via said card interface.

2. An information device having a card slot for allowing a selective calling receiver to be inserted therein to be connected, and capable of performing a plurality of types of processing including call processing, comprising:
   an interface section for receiving, from a selective calling receiver connected to the card slot, information indicating a specific call number by which said selective calling receiver is called and message information in a received selective call signal; and
   message control means for performing control in accordance with the specific call number, by which said selective calling receiver is called, such that processing performed by said information device becomes processing corresponding to the message information.

3. An information processing apparatus formed by connecting said selective calling receiver defined in claim 1 to said information device defined in claim 2 by inserting said receiver into the card slot of said device.

4. An apparatus according to claim 3, wherein
   said information device comprises:
   notifying means for notifying that said selective calling receiver is called, and
   display means for displaying message information received by said selective calling receiver,
   the call numbers of said home receiver which are stored in said memory means include a normal call number and a transparent processing call number, and
   said message control means performs control to display the message information on said display means and cause said notifying means to perform notification when the call number by which said selective calling receiver is called is the normal call number, and performs control to perform transparent processing on the basis of the message information when the call number by which said selective calling receiver is called is the transparent processing call number.

5. An apparatus according to claim 3, wherein said information device comprises:

notifying means for notifying that said selective calling receiver is called, and

display means for displaying message information received by said selective calling receiver,

wherein the call numbers of said home receiver which are stored in said memory means include a normal call number and an image processing call number, and

said message control means performs control to display the message information on said display means and cause said notifying means to perform notification when the call number by which said selective calling receiver is called is the normal call number, and performs control to convert the message information into information for image processing and display an image on said display means when the call number by which said selective calling receiver is called is the image processing number.

6. An apparatus according to claim 3, 4, or 5, wherein said information device is a portable personal computer.

7. A radio unit having an interface for connection to an information device, comprising:

memory means for storing at least two call numbers of said home unit; and

transfer control means for, when a call number in a received signal coincides with one of the call numbers stored in said memory means, performing control to transfer information indicating a specific call number by which the home unit is called and message information in the signal to said information device via said interface.

8. An apparatus having an interface for connection to an information device, comprising:

memory means for storing at least two call numbers of said home apparatus; and

transfer control means for, when a call number in a received signal coincides with one of the call numbers stored in said memory means, performing control to transfer information indicating a specific call number by which the home apparatus is called and message information in the signal to said information device via said interface.

FIG. 1

EP 0 684 742 A2

FIG. 2

CONNECTOR — 201

OSCILLATION CIRCUIT — 203

CONTROL SECTION — 202

CPU — 204
RAM — 205
ROM — 206

NOTIFYING SECTION — 207

DISPLAY SECTION — 208

KEY INPUT SECTION — 209

INFORMATION DEVICE — 200

# FIG. 3A

ONE BATCH

| PREAMBLE SIGNAL (576 BITS) | SC SIGNAL | GROUP 1 | GROUP 2 | • • • | GROUP 8 | SC SIGNAL | GROUP 1 |
|---|---|---|---|---|---|---|---|

FIRST CODE WORD

SECOND CODE WORD

# FIG. 3B

1   2                          21  22                  31  32

|   | INFORMATION BITS | CHECK BITS |   |
|---|---|---|---|

CALL NUMBER/MESSAGE INFORMATION IDENTIFICATION BIT

PARITY BIT

$\begin{cases} 0 : \text{CALL NUMBER} \\ 1 : \text{MESSAGE INFORMATION} \end{cases}$

EP 0 684 742 A2

## FIG. 4A

| SELECTIVE CALL SIGNAL | PREAMBLE SIGNAL | SC SIGNAL | GROUP 1 | GROUP 2 | GROUP 3 | ·· | SC SIGNAL | GROUP 1 | GROUP 2 |

POWER SUPPLY FOR RADIO SECTION 102

ON

OFF

POWER SUPPLY (ON) FOR SELECTIVE CALLING RECEIVER 100

## FIG. 4B

| SELECTIVE CALL SIGNAL | PREAMBLE SIGNAL | SC SIGNAL | GROUP 1 | GROUP 2 ID \| MES | GROUP 3 MES \| MES | GROUP 4 ID \| MES | ·············· | SC SIGN |

POWER SUPPLY FOR RADIO SECTION 102

ON

OFF

CALL NUMBER OF DISTANT RECEIVER

CALL NUMBER OF HOME RECEIVER

POWER SUPPLY (ON) FOR SELECTIVE CALLING RECEIVER 100

EP 0 684 742 A2

EP 0 684 742 A2

**FIG. 5**

START

ESTABLISH SYNCHRONIZATION (F-1)

START INTERMITTENT RECEIVING OPERATION (F-2)

IDENTIFICATION BIT = 0 ? — NO (F-3)

YES

DOES SELECTIVE CALL NUMBER COINCIDE WITH NORMAL CALL NUMBER ? — YES (F-4)

NO

COLLATION RESULT FLAG ← 1 (F-7)

DOES SELECTIVE CALL NUMBER COINCIDE WITH TRANSPARENT PROCESSING CALL NUMBER ? — YES (F-5)

NO

COLLATIONRESULT FLAG ← 2 (F-8)

DOES SELECTIVE CALL NUMBER COINCIDE WITH IMAGE PROCESSING CALL NUMBER ? — NO (F-6)

YES

COLLATION RESULT FLAG ← 3 (F-9)

STORE COLLATION RESULT FLAG AND MESSAGE IN RAMS 107 AND 112 (F-10)

STORE INTERRUPT STATUS IN RAM 112 (F-11)

ISSUE INTERRUPT TO INFORMATION DEVICE 200 (F-12)

13

FIG. 6

START

READ OUT INTERRUPT
STATUS FROM RAM 112 (P-1)

DOES INTERRUPT
STATUS INDICATES RECEPTION
INTERRUPT ? (P-2)

NO

YES

READ OUT COLLATION RESULT
FLAG FROM RAM 112 (P-3)

COLLATION
RESULT FLAG = 1 ? (P-4)

YES

NO

PERFORM CALL
PROCESSING

(P-7)

COLLATION
RESULT FLAG = 2 ? (P-5)

YES

NO

PERFORM TRANSPARENT
PROCESSING

(P-8)

COLLATION
RESULT FLAG = 3 ? (P-6)

NO

YES

PERFORM IMAGE
PROCESSING (P-9)

END

14